# EUROPEAN PATENT SPECIFICATION

(11) **EP 3 363 827 B1**
(45) Date of publication and mention of the grant of the patent: **11.09.2019**
(21) Application number: 17075004.6
(22) Date of filing: 21.02.2017
(51) Int. Cl.: C08F 218/10, C09D 131/02, C08F 230/08, C09D 143/04

(54) **AMBIENT CURE CROSSLINKABLE COPOLYMERS OF VINYL BRANCHED ESTER AND VINYL SILANE PREPARATION AND USE THEREOF**
BEI UMGEBUNGSTEMPERATUR VERNETZBARE COPOLYMERE VON VERZWEIGTEM VINYLESTER UND VINYLSILANHERSTELLUNG UND VERWENDUNG DAVON
PRÉPARATION DE COPOLYMÈRES RÉTICULABLES D'ESTER VINYLIQUE RAMIFIÉ ET DE VINYLE SILANE DURCISSANT À L'AIR AMBIANT ET UTILISATION ASSOCIÉE.

(43) Date of publication of application: 22.08.2018
(73) Proprietor: Hexion Research Belgium SA, 1348 Louvain-la-Neuve (BE)
(72) Inventor: Heymans, Denis, 1348 Ottignies Louvain-La-Neuve (BE); Romanowska, Catherine, 1348 Ottignies Louvain-La-Neuve (BE)

(56) References cited:
- US-A- 5 162 426
- US-A- 5 886 125
- US-A1- 2003 170 468

## Description

The present invention relates to modified vinyl branched ester polymer with vinyl silane. The copolymer composition can be formulated to the desired viscosity that allows the application by standard coating technics, and the curing rate is optimized in the presence of an appropriated catalyst. The copolymer composition having 15 to 95% by weigh of a (A) vinyl ester of a carboxylic acid and 5 to 35% by weight of (B) a vinyl silane and optionally (C) 0 to 40% vinyl acetate, (D) O to 40% of an acrylate or metacrylate ester and optionally (E) 0 to 25% of acrylosilane monomers and (F) 0 to 25% of any other vinylic monomer.

The use of silane in coating formulations are well known and specially silane having hydrolysable groups, this groups can be introduced in a coating formulation by making a blend of polymer based on it with acrylic polymers or vinyl polymer. The silane reactive groups can be built in a polymeric chain by using an ethylenic unsaturated monomer such as methacryloxyalkyl silane or vinyl silane by copolymerization with either acrylic monomers or vinyl momnomers or combination thereof. In the US 5,886,125 the authors has developed a crosslinkable formulation having an average molecular weight below 40,000 ,a hydroxyl value from 20 to 160 and an acid value below 20. The clearcoat paint formulated with the copolymer is applied on wet-on-wet base coated and further cured for 30 minutes at 135°C.

The industry is looking to reduce the cured cycle and specially the temperature to save energy. The present invention concerns a crosslinkable polymeric composition having a Number average molecular weight between 5,000 and 40,000 derived from A and B monomers, and optionally C, D, E and F monomers wherein :
A is 15 to 95% by weight of the total monomers having the formula: 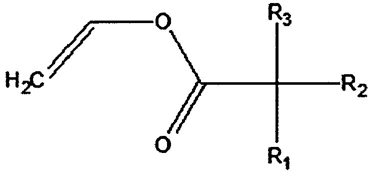 wherein R1, R2, R3 are hydrogen or alkyl groups with 1 to 15 carbon atoms, the total number of Carbon atoms of R1,R2 and R3 ranging from 1 to 20 and
B is 5 to 35% by weight of the total monomers of a vinyl silane having the formula: 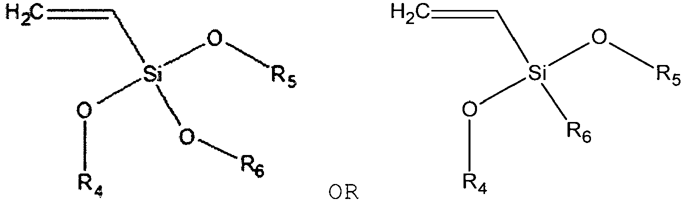 wherein R4, R5 and R6 are alkyl groups having 1 to 4 carbon atoms,
C is 0 to 40wt% vinyl acetate
D is 0 to 40% weight of a acrylate/or metacrylate ester
E is 0 to 25% weight of a acrylosilane such as acrylopropyl trimethoxy silane, acrylopropyl triethoxy silane and the like.
F is 0 to 25 % of any other vinylic monomer

Preferred ranges of A,B, C, D,E and F are:
A is 15 to 95%;
B is 5 to 35%;
C is 0 to 40%,and
D is 0 to 40%.
E is 0 to 25%
F is 0 to 25%

Wherein the total of monomer B and E ranges from 5 to 35% and the total of monomers A and C amounts to at least 50%

More preferred ranges of monomers are:
A is 40 to 90%;
B is 5 to 30%;
C is 0 to 40%,and
D is 0 to 40%
E is 0 to 25%
F is 0 to 25%

Wherein the total of monomer B and E ranges from 10 to 30%

The most preferred range of monomers are
A is 50 to 85%;
B is 5 to 30%;
C is 0 to 40%,
D is 0 to 20%
E is 0 to 25%
F is 0 to 25%

Wherein the total of monomer B and E ranges from 15 to 30%

Preferred vinyl silanes (B) wherein R4, R5 and R6 are alkyl groups having 1 to 4 carbon atoms.

Preferred vinyl esters (A) are those derived from branched acids such as pivalic acid,2-ethyl hexanoic, Versatic acid(trademark from Hexion Inc.)wherein the total carbon atoms in R1,R2 and R3 are 7,8,9 and 10. The most preferred branched acids are Versatic 9 or Versatic 10.

The preferred number molecular weights average of the copolymer resins are 5,000 and 25,000.

More particularly the copolymer composing is free from hydroxyl groups.

This invention also concerns a coating formulation comprising the copolymer based on the monomers A, B, C, D, E and F in a weight ratio of between 10 and 90 % , 0.1 to 3% of a catalyst and the difference to the 100% is an organic solvent a blend of organic solvents, pigments, charges and paint additives.

This invention also concerns an one package system that has an extended Shelf-life of at least one month comprising a coating formulation comprising the copolymer based on the above monomers A and B in a weight ratio of between 10 and 90 % , 0.5 to 3% of a catalyst and the difference to the 100% is an organic solvent a blend of organic solvents, pigments, charges and paint additives.

The catalyst for the coating formulation could be selected from:
Strong acid, lewis acid and amines such as
SiliXan Cat 240(SiliXan GmbH), Nacure 4054, Nacure 5076, TYZOR TNBT, TYZOR 9000,K-Kat 670(King Industries), DBTDL (dibutyl tin dilaurate)(Sigma Aldrich),3-Aminopropyltrimethoxysilane(Sigma).

The most preferred catalyst for an one package system for coating formulation is Nacure 4054.

An extended shelf-life, more than 6 months is observed in closed containers.

### Experimental

**Examples 1 to 3:** in a 2L glass reactor equipped with a stirrer and a nitrogen inflow. The solvent (part 1) is poured in the reactor and a nitrogen blanket is applied (101n/h). The stirrer is set at 80RPM. The temperature is set to 115°C. The monomer mix I is prepared by mixing the monomers, of part 3 and the initiator. Once the temperature inside the reactor is reached, a shot of (part 2) is added and the nitrogen flow is stopped. Afterwards the addition of monomer mix I starts. The first 30min, the flow rate is twice faster; afterwards it is reduced to its normal flow during 2h30 and eventually reduced by another 50% during the last hour. At the end of the addition, the booster composed of the initiator and the solvent (part 5) is added for 1 hour at 115°C. Then, the reactor is kept at 115°C for an hour. The reactor is eventually cooled down below 80°C.
**Example 4:** in a 3L glass reactor equipped with a stirrer and a nitrogen inflow. The solvent (part 1) is poured in the reactor and a nitrogen blanket is applied (101n/h). The stirrer is set at 80RPM. The temperature is set to 115°C. The monomer mix I is prepared by mixing the monomers, of part 3 and the initiator. Once the temperature inside the reactor is reached, a shot of (part 2) is added and the nitrogen flow is stopped. Afterwards the monomer mix I is added into the reactor over a period of 5 hours. At the end of the addition, the booster composed of the initiator and the solvent (part 5) is added for 1 hour at 115°C. Then, the reactor is kept at 115°C for an hour. The reactor is eventually cooled down below 80°C.
**Comparative Example 5:** in a 2L glass reactor equipped with a stirrer and a nitrogen inflow. The solvent (part 1) is pour in the reactor and a nitrogen blanket is applied (101n/h). The stirrer is set at 120RPM. The temperature is set to 115°C. The monomer mix I is prepared by mixing monomers of part 3 and the initiator. Monomer mix II is prepared by mixing the monomers of part 4 and the initiator. Once the temperature inside the reactor is reached, a shot of initiator (part 2) is added and the nitrogen flow is stopped. Afterwards the monomer mix I is added in Monomer mix I over a period of 3 hours. Simultaneously, monomer mix I is added into the reactor over a period of 4 hours. At the end of the addition, the booster composed of the initiator and the solvent (part 5) is added for 1 hour at 115°C. Then, the reactor is kept at 115°C for an hour. The reactor is eventually cooled down below 80°C.
**Comparative Examples 6 and 7:** in a 2L glass reactor equipped with a stirrer and a nitrogen inflow. The solvent (part 1) is poured in the reactor and a nitrogen blanket is applied (101n/h). The stirrer is set at 80RPM. The temperature is set to 115°C. The monomer mix I is prepared by mixing the monomers, of part 3 and the initiator. Once the temperature inside the reactor is reached, a shot of (part 2) is added and the nitrogen flow is stopped. Afterwards the monomer mix I is added into the reactor over a period of 4 hours. At the end of the addition, the booster composed of the initiator and the solvent (part 5) is added for 1 hour at 115°C. Then, the reactor is kept at 115°C for an hour. The reactor is eventually cooled down below 80°C.
**Procedure for coating formulation:** The resin is first diluted with the solvent (of the synthesis) to a viscosity between 300 and 400 cPs. Then the catalyst is added to the diluted resin at a level of 0.05 to 3 % active. Afterwards, the formulated resin is applied on a panel at 100um wet with a Mayer rod and left to dry at 23±2°C and 50±5%

**Table 1: resins characteristics and coating performance**

| | **Ex 1** | **Ex 2** | **Ex 3** | **Ex 4** | **C Ex 5** | **C Ex 6** | **C Ex 7** |
|---|---|---|---|---|---|---|---|
| **Part 1** | | | | | | | |
| **Butyl Acetate** | 210 | 210 | 315 | 308 | 395 | 391.9 | 393.4 |

| **Part 2** | | | | | | | |
|---|---|---|---|---|---|---|---|
| **TBPiN** | 4 | 4 | 6 | 8.7 | 4.4 | 3.9 | 4.4 |
| | | | | | | | |

| **Part 3 (monomer mix I)** | | | | | | | |
|---|---|---|---|---|---|---|---|
| **VeoVa 9** | - | 333.5 | - | - | 222.3 | 734.8 | - |
| **VeoVa 10** | 711 | 333.5 | 733.5 | - | 277.9 | - | - |
| **VeoVa EH** | - | - | - | 1463 | - | - | - |
| **VAM** | - | - | 333 | - | - | - | - |
| **Methyl methacrylate** | - | - | - | - | 74 | - | 591.2 |
| **Butyl acrylate** | - | - | - | - | - | - | 147.8 |
| **vinyltrimethoxysilane** | 178 | 110.7 | 267 | 243.5 | 246.4 | - | - |
| **methacrylopropyltrimethoxysilane** | - | 110.7 | | 243.5 | - | 244.9 | 246.4 |
| **TBPiN** | 14.6 | 14.6 | 21.9 | 32.1 | 8.1 | 15.6 | 16.2 |
| | | | | | | | |

| **Part 4 (monomer mix II)** | | | | | | | |
|---|---|---|---|---|---|---|---|
| **VeoVa 9** | - | - | - | - | 74.1 | - | - |
| **VeoVa 10** | - | - | - | - | 92.6 | - | - |
| **TBPiN** | - | - | - | - | 8.1 | - | - |

| **Part 5** | | | | | | | |
|---|---|---|---|---|---|---|---|
| **TBPiN** | 53 | 35.2 | 52.8 | 77.4 | 39.1 | 39.2 | 39.0 |
| **Butyl acetate** | 37.5 | 25 | 37.5 | 55 | 53.6 | 53.9 | 53.6 |

| | Test Results | | | | | | |
|---|---|---|---|---|---|---|---|
| Solids (%) | 79.5 | 80 | 80 | 85.1 | 70 | 70.0 | 70.0 |
| Viscosity (cPs) | 1000 | 4 500 | 5 200 | 5 000 | 200 | 2 200 | 40 000 |
| Residual monomers (ppm) | BD * | 300 | BD * | 250 | 1200 | 200.0 | 7 200 |
| | | | | | | | |
| Mw (g/mol) [DIN Standard 55672] | 11500 | 15 600 | 23 00 | 48 000 | 8 400 | 25 500 | 80 000 |
| Mn (g/mol) [DIN Standard 55672] | 5 000 | 6 500 | 7 500 | 8 300 | 4 000 | 10 000 | 20 500 |
| pot-life (months) | > 6 | > 6 | > 6 | > 6 | > 6 | limited | 0 |
| Hardness after 24h drying (s) | 15 | 58 | 28 | 30 | 31 | 120 | NT ** |
| MEK double rub after 7days drying (number of cycles) [ASTM D4752] | NT** | 74 | 39 | 24 | NT ** | 111 | NT ** |
| MEK double rub after 30days drying (number of cycles) [ASTM D4752] | 98 | 98 | NT ** | NT ** | NT ** | NT ** | NT ** |
| * BD = Below detection ** NT = Not tested | | | | | | | |

**Example 8** (Comparative ex 5 of US 5 886 125)
In a 1L glass reactor equipped with a stirrer and a nitrogen inflow. The solvent (part 1) is poured in the reactor and a nitrogen blanket is applied (101n/h). The stirrer is set at 70RPM and the temperature to 125°C. The monomer mix is then prepared by mixing together the ingredients of part 2. Once the temperature inside the reactor is reached, the nitrogen flow is stopped and the monomer mix is added into the reactor over a period of 5 hours. During the addition, the temperature is increased by 2°C every minute until reflux and the temperature is then maintained the rest of the feeding time. At the end of the addition, part 3 is added for rinsing. The temperature is still maintained at reflux for 10 minutes. Afterwards, part 4, composed of the initiator and the solvent, is added for 20 minutes. At the end of the addition, Part 5 is added for rinsing and the temperature is then kept at reflux for another 2 hours. Part 6 is added and the reactor is eventually cooled down below 80°C.

Procedure for coating formulation same as for examples 1 to 5 and comparative examples 5 to 7.

**Table 2: Comparative example**

| | **Ex 8** |
|---|---|
| **Part 1** | |
| **Solvesso 100** | 80 |
| | |

| **Part 2** | |
|---|---|
| **VeoVa 10** | 509.4 |
| **vinyltrimethoxysilane** | 127.4 |
| **Solvesso 100** | 28 |
| **Luperox Dl** | 27.2 |
| | |

| **Part 3** | |
|---|---|
| **Solvesso 100** | 8 |
| | |

| **Part 4** | |
|---|---|
| **Solvesso 100** | 4.8 |
| **Luperox DI** | 3.2 |
| | |

| **Part 5** | |
|---|---|
| **Solvesso 100** | 12.7 |
| | |

| **Part 6** | |
|---|---|
| **Solvesso 100** | 58 |
| | |

| Test Results | |
|---|---|
| Solids (%) | 78.3 |
| Viscosity (cPs) | 600 |
| | |
| Mw (g/mol) [DIN Standard 55672] | 2 900 |
| Mn (g/mol) [DIN Standard 55672] | 1400 |
| | |
| Hardness after 24h drying (s) | not cured |
| | |
| MEK double rub after 7days drying (number of cycles) [ASTM D4752] | not cured |

## Claims

1. A crosslinkable polymeric composition having a number average molecular weight between 5,000 and 40,000 (according to DIN St 55672) derived from A, B, C, D, E and F monomers wherein :
A is 15 to 95% by weight of the total monomers having the formula: 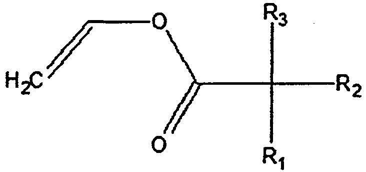 wherein R1, R2, R3 are hydrogen or alkyl groups with 1 to 15 carbon atoms, the total number of Carbon atoms of R1,R2 and R3 ranging from 1 to 20 and
B is 5 to 35% by weight of the total monomers of a vinyl silane having the formula: 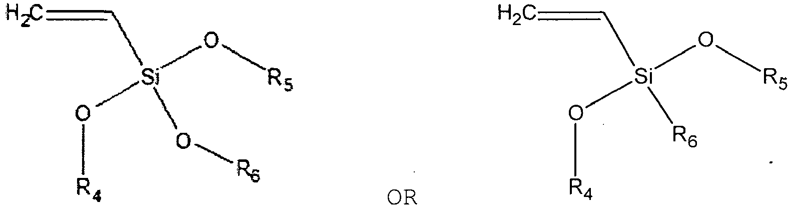 wherein R4, R5 and R6 are alkyl or alkyloxy groups having 1 to 4 carbon atoms ,
C is 0 to 40% by weight of vinyl acetate
D is 0 to 40% weight of a acrylate/or metacrylate ester
E is 0 to 25% weight of a acrylosilane monomer.
F is 0 to 25% weight of any other vinyl monomer

2. The composition of claim 1 wherein the ranges of A, to F are:
A is 15 to 95%,
B is 5 to 35%,
C is 0 to 40%,
D is 0 to 40%,
E is 0 to 25%,
F is 0 to 25%,
wherein the total of monomer B and E ranges from 5 to 35% and the total of monomer A and C amounts to at least 50%.

3. The composition of claims 1 or 2 wherein vinyl esters (A) are those derived from branched acids with a total carbon atoms in R1,R2 plus R3 ranges from 6 to 12.

4. The composition of claims 1 or 2 **characterized in that** monomer B is vinyl trimethoxy silane or vinyl triethoxy silane.

5. A moisture curing, 1K paint formulation comprising the composition of any of claims 1 to 4 in a weight ratio of between 10 and 90 % , 0.1 and 3% of a catalyst and the difference to the 100% is an organic solvent or a blend of organic solvents, pigments charges and paint additives.

6. The 1K paint formulation of claim 5 **characterized in that** the catalyst is selected from : phosphate acid, sulfonic acid, Zn complex, organo-tin complex, titanate complex or amino-silane, the most preferred is the phosphate acid type catalyst for an one package system paint formulation.

7. A process to make the composition of claims 1 to 4 by radical polymerization at a temperature between 100°C and 140°C.

8. A process of hardening the 1K paint formulation of claim 5 at a temperature below 60°C in presence of ambient moisture.

## Patentansprüche

1. Vernetzbare polymere Zusammensetzung mit einem zahlenmittleren Molekulargewicht zwischen 5.000 und 40.000 (gemäß DIN St 55672), abgeleitet von A-, B-, C-, D-, E- und F-Monomeren, worin:
A 15 bis 95 Gew .-% der gesamten Monomere mit der Formel: 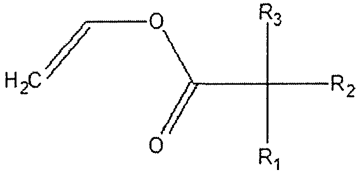 ist,
worin R1, R2, R3 Wasserstoff oder Alkylgruppen mit 1 bis 15 Kohlenstoffatomen sind, die Gesamtzahl der Kohlenstoffatome von R1, R2 und R3 im Bereich von 1 bis 20 liegt und
B 5 bis 35 Gew .-% der gesamten Monomere eines Vinylsilans der Formel: 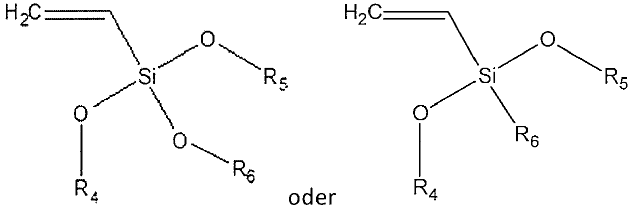 ist,
worin R4, R5 und R6 Alkyl- oder Alkyloxygruppen mit 1 bis 4 Kohlenstoffatomen sind,
C 0 bis 40 Gew .-% Vinylacetat ist,
D 0 bis 40 Gew .-% eines Acrylat- / oder Metacrylatesters ist,
E 0 bis 25 Gew .-% eines Acrylsilanmonomers ist
F 0 bis 25 Gew .-% eines anderen Vinylmonomers ist.

2. Zusammensetzung nach Anspruch 1, wobei die Bereiche von A bis F sind:
A ist 15 bis 95 %,
B ist 5 bis 35 %,
C ist 0 bis 40 %,
D ist 0 bis 40 %,
E ist 0 bis 25 %,
F ist 0 bis 25 %,
wobei die Gesamtmenge an Monomer B und E im Bereich von 5 bis 35 % liegt und die Gesamtmenge an Monomer A und C mindestens 50 % beträgt.

3. Zusammensetzung nach Anspruch 1 oder 2, worin Vinylester (A) solche sind, die abgeleitet sind von verzweigten Säuren mit einer Gesamtkohlenstoffatomzahl in R1, R2 plus R3 im Bereich von 6 bis 12.

4. Zusammensetzung nach Anspruch 1 oder 2, **dadurch gekennzeichnet, dass** das Monomer B Vinyltrimethoxysilan oder Vinyltriethoxysilan ist.

5. Feuchtigkeitshärtende 1K-Lackformulierung, umfassend die Zusammensetzung nach einem der Ansprüche 1 bis 4 in einem Gewichtsverhältnis zwischen 10 und 90 %, 0,1 und 3 % eines Katalysators und die Differenz zu 100 % ist ein organisches Lösungsmittel oder eine Mischung aus organischen Lösungsmitteln, Pigmentchargen und Lackadditiven.

6. 1K-Lackformulierung nach Anspruch 5, **dadurch gekennzeichnet, dass** der Katalysator ausgewählt ist aus: Phosphatsäure, Sulfonsäure, Zn-Komplex, Organozinn-Komplex, Titanat-Komplex oder Aminosilan, am meisten bevorzugt ist der Phosphatsäure-Katalysator für eine Packung Systemlackrezeptur.

7. Verfahren zur Herstellung der Zusammensetzung der Ansprüche 1 bis 4 durch radikalische Polymerisation bei einer Temperatur zwischen 100 ºC und 140 ºC.

8. Verfahren zum Härten der 1K-Lackformulierung nach Anspruch 5 bei einer Temperatur unter 60º C in Gegenwart von Umgebungsfeuchtigkeit.

## Revendications

1. Une composition de polymère réticulable ayant un poids moléculaire en nombre moyen compris entre 5 000 et 40 000 (selon le Standard DIN 55672), et dérivée des monomères A, B, C, D, E et F, dans laquelle:
A est de 15 à 95% en poids du total des monomères ayant la formule: 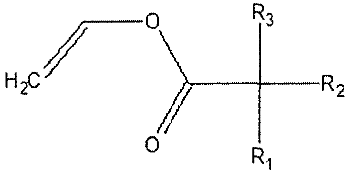 dans lesquels R1, R2, R3 sont des groupes hydrogène ou alkyle de 1 à 15 atomes de carbone, le nombre total d'atomes de carbone de R1, R2 et R3 compris entre 1 et 20 et
B est de 5 à 35% en poids du total des monomères d'un vinyl silane répondant à la formule: 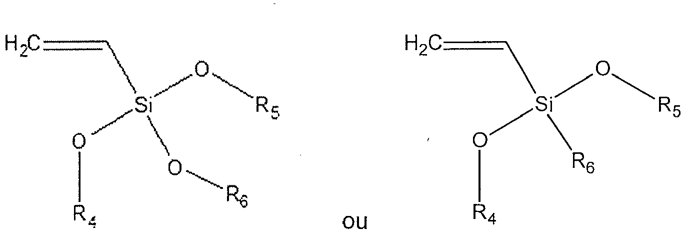 dans laquelle R4, R5 et R6 sont des groupes alkyle ou alkyloxy ayant 1 à 4 atomes de carbone,
C est de 0 à 40% en poids d'acétate de vinyle
D est de 0 à 40% en poids d'un ester d'acrylate / ou de métacrylate
E est de 0 à 25% en poids d'un monomère d'acrylosilane.
F est de 0 à 25% en poids de tout autre monomère vinylique

2. Composition selon la revendication 1, dans laquelle les gammes de A à F sont:
A est de 15 à 95%,
B est de 5 à 35%,
C est de 0 à 40%,
D est de 0 à 40%,
E est de 0 à 25%,
F est de 0 à 25%,
dans laquelle le total des monomères B et E est compris entre 5 et 35% et le total des monomères A et C étant d'au moins de 50%.

3. Composition selon les revendications 1 ou 2, dans laquelle les esters vinyliques (A) sont ceux dérivés d'acides ramifiés avec un nombre total d'atomes de carbone dans R1, R2 et R3 compris entre 6 et 12.

4. Composition selon les revendications 1 ou 2, **caractérisée en ce que** le monomère B est le vinyl triméthoxy silane ou le vinyl triéthoxy silane.

5. Formulation de peinture 1K durcissant à l'humidité, comprenant la composition selon l'une quelconque des revendications De Cock, Christian 1 à 4, dans un rapport pondéral compris entre 10 et 90%, 0,1 et 3% d'un catalyseur et la différence par rapport au 100% correspondant à un solvant organique ou à un mélange de solvants organiques, charges de pigments et additifs de peinture.

6. Formulations de peinture 1K selon la revendication 5, **caractérisées en ce que** le catalyseur est choisi parmi: acide phosphoric, acide sulfonique, complexe de Zn, complexe organo-étain, complexe de titanate ou amino-silane, le plus préféré étant le catalyseur de type acide de phosphoric pour un système de formulation de peinture 1K.

7. Un procédé de fabrication des copositions des revendications 1 à 4 par polymérisation radicalaire à une température comprise entre 100 ° C et 140 ° C.

8. Un procédé de durcissement de la formulation de peinture 1K selon la revendication 5 à une température inférieure à 60 ° C en présence d'humidité ambiante.
